# FASCICULE DE BREVET EUROPEEN

(11) **EP 2 366 989 B1**
(45) Date de publication et mention de la délivrance du brevet: **08.07.2020**
(21) Numéro de dépôt: 11001289.5
(22) Date de dépôt: 17.02.2011
(51) Int. Cl.: G01M 13/021, G01M 13/028, B64C 27/12, G01H 1/00

(54) **Ensemble mécanique muni d'un moyen de surveillance d'anomalie structurale boîte de transmission munie d'un tel ensemble mécanique, et procédé de sureillance d'anomalie structurale**
Mechanische Anordnung mit Mittel zur Überwachung strukturellen Anomalie, Getriebe mit solchen mechanischen Anordnung und Verfahren zur Überwachung strukturellen Anomalie
Mechanical assembly with means for monitoring structural anomaly, gearbox provided with such mechanical assembly and method for monitoring structural anomaly

(30) Priorité: 19.03.2010 FR 1001094
(43) Date de publication de la demande: 21.09.2011
(73) Titulaire: Airbus Helicopters, 13725 Marignane Cedex (FR)
(72) Inventeur: Morel, Hervé, 13113 Lamanon (FR)
(74) Mandataire: Pouillot, Laurent Pierre Paul

(56) Documents cités:
- EP-A2- 0 889 314
- WO-A1-2007/085259
- US-A1- 2004 200 283

## Description

La présente invention concerne un ensemble mécanique muni d'un moyen de surveillance d'anomalie structurale, une boîte de transmission munie d'un tel ensemble mécanique, et un procédé de surveillance d'anomalie structurale mis en œuvre par ledit ensemble mécanique.

Plus particulièrement, l'invention se situe dans le domaine des boîtes de transmission d'un aéronef, et notamment d'un giravion de type hélicoptère.

En effet, un giravion comporte une installation motrice pour mettre en rotation sa voilure tournante. L'installation motrice est munie d'un ou plusieurs moteurs thermiques pour mettre en mouvement les engrenages d'une boîte de transmission, notamment une boîte de transmission principale d'un hélicoptère entraînant en rotation la voilure tournante cet hélicoptère.

La boîte de transmission principale comporte un ensemble mécanique muni d'éléments mécaniques mobiles en contact les uns avec les autres, de type engrenages par exemple. Classiquement, l'ensemble mécanique comprend un premier arbre mis en rotation par l'installation motrice, ce premier arbre étant solidaire d'un engrenage planétaire d'un moyen de réduction épicycloïdal.

Cet engrenage planétaire coopère alors avec une pluralité d'engrenages satellites dudit moyen de réduction. Chaque engrenage satellite comprend alors un corps denté entourant au moins un moyen de liaison par roulement à billes ou à rouleaux fixé à un maneton, ce maneton de l'engrenage satellite étant solidaire d'un porte-satellite, ce porte-satellite étant solidaire d'un deuxième arbre constituant éventuellement le mât du rotor d'un giravion.

On note que l'on entend, par commodité dans la suite du texte, par « roulement » ou « moyen de liaison par roulement » un roulement à billes ou un roulement à rouleaux voire tout autre type de roulement connu.

Dès lors, chaque engrenage satellite effectue d'une part une rotation autour d'un premier axe de rotation de cet engrenage satellite et, d'autre part une rotation autour d'un deuxième axe de rotation du porte-satellite.

De plus, l'ensemble mécanique comporte une couronne extérieure dentée, une périphérie interne de la couronne extérieure coopérant avec chaque engrenage satellite. En effet, chaque engrenage satellite se déplace dans un espace annulaire situé entre la périphérie interne de la couronne extérieure et l'engrenage planétaire.

On constate que l'ensemble mécanique est susceptible de se dégrader avec le temps, des criques pouvant par exemple apparaître sur le corps ou le moyen de liaison par roulement d'un engrenage satellite.

Des inspections visuelles peuvent alors être prévues pour détecter d'éventuelles criques, les pièces endommagées étant alors remplacées. De même, il est aussi possible de chercher la présence de particules métalliques dans le liquide de lubrification de l'ensemble mécanique.

Pour faciliter la détection de criques, on connaît une technique mettant en œuvre au moins un accéléromètre agencé sur une périphérie extérieure de la couronne ne donnant pas sur l'espace annulaire. Chaque accéléromètre est relié à un organe de contrôle qui reçoit et analyse le signal provenant de l'accéléromètre. On comprend que l'accéléromètre est séparé de chaque composant d'un satellite, et notamment son moyen de liaison par roulement, par une distance variable durant la rotation des ces organes mobiles.

Le passage d'un élément mécanique au niveau d'une crique génère une vibration susceptible d'être détectée par un accéléromètre. Par exemple le passage d'une bille ou d'un rouleau d'un moyen de liaison par roulement contre une crique s'étendant dans le corps d'un engrenage satellite génère une vibration. Ainsi, si l'organe de contrôle reçoit un signal provenant d'un accéléromètre synonyme de criques, l'organe de contrôle est à même d'émettre une alarme.

Ce dispositif est très efficace. Néanmoins, la vibration émise par le passage d'une bille ou d'un rouleau sur une crique est de très faible amplitude. En fonction de la distance variable séparant le capteur d'un accéléromètre de la bille ou du rouleau au moment dudit passage, cet accéléromètre risque d'être trop éloigné et l'organe de contrôle risque de ne pas détecter ladite vibration.

Le document EP 0 889 314 présente un procédé de surveillance d'un ensemble de transmission mis en œuvre par un tel dispositif de surveillance consistant à :
- acquérir un signal à partir d'un accéléromètre,
- calculer une transformée dans le domaine de fréquence dudit signal afin d'obtenir une séquence d'échantillons,
- acquérir un échantillon dans ladite séquence d'échantillons, calculer une valeur d'amplitude réelle dudit échantillon acquis,
- calculer un écart relatif entre ladite valeur d'amplitude réelle et une valeur d'amplitude de référence, et
- comparer ledit écart relatif avec au moins un premier seuil prédéterminé.

De même, le document EP 0 899 553 présente un procédé de surveillance d'un ensemble de transmission mis en œuvre par un tel dispositif de surveillance consistant à :
- acquérir un signal en provenance d'un capteur d'accélération,
- échantillonner ledit signal à une fréquence d'échantillonnage afin d'obtenir une séquence initiale d'échantillons,
- répartir les échantillons présents dans ladite séquence initiale en groupes, chacun défini par un nombre prédéterminé d'échantillons, lesdits groupes d'échantillons étant ordonnés en une succession et ayant chacun une position respective dans ladite succession,
- réaliser un premier filtrage de ladite succession de groupes d'échantillons afin d'obtenir une première séquence intermédiaire d'échantillons, et
- traiter ladite première séquence intermédiaire d'échantillons afin d'obtenir une séquence finale d'échantillons

L'arrière plan technologique comporte notamment le document WO 2007/085259, le document US 2004/200283 et le document DE 4 239 096.

Par exemple, le document DE 4 239 096 décrit un dispositif de surveillance des efforts de torsions. Ce dispositif est muni d'une jauge de contrainte transmettant des signaux à un organe de réception via une liaison sans fil.

La présente invention a alors pour objet de proposer un ensemble mécanique muni d'un moyen de surveillance d'anomalies de tous types permettant d'augmenter les performances de la surveillance effectuée.

Selon l'invention, un ensemble mécanique est muni d'un engrenage planétaire ainsi que d'une pluralité d'engrenages satellites coopérant avec l'engrenage planétaire, cet ensemble mécanique ayant un porte-satellite portant chaque engrenage satellite, chaque engrenage satellite comprenant un corps denté ainsi qu'un moyen de liaison par roulement interposé entre une partie inférieure d'un maneton de l'engrenage satellite et ledit corps, chaque maneton ayant une partie supérieure saillante solidaire du porte-satellite, chaque corps d'un engrenage satellite effectuant d'une part une première rotation autour d'un premier axe de rotation de cet engrenage satellite et d'autre part une deuxième rotation autour d'un deuxième axe de rotation du porte-satellite, l'ensemble mécanique comportant une couronne extérieure ayant une périphérie interne coopérant avec chaque engrenage satellite, chaque engrenage satellite se déplaçant dans un espace annulaire situé entre la périphérie interne et l'engrenage planétaire. L'ensemble mécanique est alors un moyen de réduction épicycloïdal, l'engrenage planétaire pouvant être lié à un moteur par un premier arbre notamment et le porte-satellite pouvant être solidaire en rotation d'un deuxième arbre tel qu'un mât d'un rotor de giravion.

Cet ensemble mécanique est notamment remarquable en ce que chaque engrenage satellite comporte un capteur de vibrations d'un moyen de surveillance d'anomalie structurale, le moyen de surveillance étant pourvu d'un organe de contrôle communiquant avec chaque capteur de vibrations afin de recevoir un signal de mesure provenant de chaque capteur de vibrations pour permettre la surveillance d'anomalie.

Le moyen de surveillance comporte au moins une antenne disposée sur une périphérie externe de la couronne, l'organe de contrôle étant déporté et communiquant avec lesdits un capteur de vibrations par l'intermédiaire de ladite antenne. L'organe de contrôle communique avec l'antenne, cette antenne communiquant avec les capteurs de vibrations.

L'organe de contrôle est actif et détermine si l'ensemble mécanique comporte une anomalie. Le moyen de surveillance peut alors comporter un moyen d'alarme activé en cas de découverte d'une anomalie, telle qu'une alarme sonore ou visuelle.

Par conséquent, selon l'invention on agence des capteurs de vibrations non pas sur la périphérie externe de la couronne extérieure délimitant l'espace annulaire dans lequel évoluent les engrenages satellites, mais au sein même de chaque engrenage satellite.

Dès lors, un capteur de vibrations est toujours à une distance très réduite d'une éventuelle crique ce qui permet d'optimiser la détection d'anomalie. En allant à l'encontre des solutions usuelles et en considérant qu'il est possible d'agencer un capteur de vibrations dans un engrenage satellite, l'invention permet d'optimiser la surveillance de l'ensemble mécanique.

Pour détecter l'anomalie, on peut utiliser le signal de mesure de chaque capteur de vibrations selon les procédés connus, par exemple les procédés des documents EP 0 899 553 et EP 0 889 314 ou encore selon un procédé explicité par ailleurs visant à comparer les signaux vibratoires résultant des signaux de mesure provenant des capteurs de vibrations pour effectuer un diagnostic d'anomalie.

En effet, les engrenages satellites étant identiques, une variation entre deux signaux de mesure valides est synonyme d'une anomalie structurale d'au moins l'un d'entre eux.

De plus, l'ensemble mécanique peut comporter une ou plusieurs des caractéristiques additionnelles suivantes.

Par exemple, l'organe de contrôle peut être un microcontrôleur ou un microprocesseur. De plus, un capteur de vibration peut être indifféremment soit un accéléromètre soit un capteur à émission acoustique.

En outre, chaque capteur de vibration étant agencé dans un engrenage satellite, au moins un capteur de vibrations est autoalimenté électriquement. Par exemple, un capteur de vibrations est autoalimenté électriquement par un moyen interne de transformation de l'énergie générée par le mouvement rotatif qu'il effectue autour du premier axe de rotation notamment ou encore par un moyen interne de transformation de la chaleur en énergie électrique. L'intégration au sein d'un engrenage satellite est donc facilitée.

Selon un autre aspect, un capteur de vibrations est optionnellement agencé à l'intérieur du maneton d'un engrenage satellite. Dès lors, un maneton comportant une cavité, on agence le capteur de vibration dans la cavité.

On note que le maneton peut naturellement comporter ladite cavité. Cependant dans la négative, on usine le maneton pour percer la cavité requise.

Eventuellement, on peut obturer cette cavité de manière étanche. Ainsi, le capteur de vibrations se trouve dans un milieu étanche et ne risque pas d'être endommagé par des moyens de lubrification de l'ensemble mécanique.

De plus, un capteur de vibration est alors agencé sur le premier axe de rotation et de symétrie de l'engrenage satellite correspondant. Il en résulte qu'une distance égale au rayon de l'engrenage satellite sépare chaque capteur de vibration aussi de la périphérie interne de la couronne et de l'engrenage planétaire. Ladite distance est alors minimisée ce qui optimise la détection d'anomalie.

Par exemple, le capteur de vibrations est agencé à l'intérieur de la partie inférieure du maneton.

Selon un autre aspect, le moyen de liaison par roulement d'un engrenage satellite donné étant contenu dans un plan de roulement, le capteur de vibrations de l'engrenage satellite donné est disposé dans un plan de surveillance surplombant le plan de roulement.

Eventuellement, le capteur de vibrations d'un engrenage satellite se trouve autour du maneton de cet engrenage satellite et au-dessus du moyen de liaison par roulement de cet engrenage satellite pour ne pas être détérioré par un moyen de lubrification du moyen de liaison par roulement.

Selon un autre aspect, les capteurs de vibrations sont disposés dans un même plan de surveillance. Les mesures effectuées par les capteurs de vibrations sont ainsi homogènes ce qui permet d'optimiser le fonctionnement du moyen de surveillance.

Par ailleurs, le capteur de vibrations d'un engrenage satellite donné peut effectuer des mesures dans un plan de mesure parallèle à un plan de roulement de l'engrenage satellite donné, par exemple le plan de surveillance précité.

Ainsi, le capteur de vibration peut être un accéléromètre bi-axial apte à effectuer des mesures selon deux axes contenus dans le plan de mesure, des axes radiaux par rapport à l'engrenage satellite par exemple.

Selon une première variante, l'organe de contrôle est agencé à proximité des capteurs de vibrations, par exemple sur la périphérie externe de la couronne.

Par ailleurs, le moyen de surveillance peut comporter une mémoire de stockage, les signaux de mesure transitant par l'organe de contrôle puis étant stockés dans la mémoire de stockage. La mémoire de stockage peut être intégrée dans l'organe de contrôle.

Outre un ensemble mécanique, l'invention a pour objet une boîte de transmission d'un giravion comportant un ensemble mécanique selon l'invention du type décrit précédemment.

De plus, l'invention vise un procédé de surveillance d'une anomalie structurale d'un ensemble mécanique type décrit précédemment muni d'au moins deux capteurs de vibrations, au cours duquel :
- on acquiert un signal de mesure par capteur de vibrations agencé dans un engrenage satellite,
- on génère une signature vibratoire par signal de mesure acquis,
- on compare la signature vibratoire provenant de chaque capteur de vibrations à des signatures vibratoires provenant des autres capteurs de vibrations,
- on constate la présence d'une anomalie dans un engrenage satellite donné si la signature vibratoire provenant du capteur de vibrations dudit engrenage satellite donné diffère des signatures vibratoires provenant des autres capteurs de vibrations.

La comparaison de signatures vibratoires peut être réalisée par des analyses métriques, tel que par exemple par comparaison de la distance euclidienne ou encore de la distance de Mahalanobis.

Ce procédé analyse les signatures vibratoires relativement les unes par rapport aux autres. Il est donc aisé de le mettre en œuvre dans la mesure où il ne nécessite ni une phase d'apprentissage ni des phases de calcul de seuils spécifiques à chaque hélicoptère. Il est donc adaptable sur n'importe quel ensemble mécanique.

Ce procédé peut aussi comporter une ou plusieurs des caractéristiques additionnelles qui suivent.

Par exemple, l'ensemble mécanique ayant au moins trois capteurs de vibrations, on constate la présence d'une anomalie dans un organe lié à tous les engrenages satellites, si les signatures vibratoires provenant des capteurs de vibrations diffèrent les unes des autres.

De plus selon une option, suite à l'acquisition d'un signal de mesure, on vérifie l'intégrité du signal pour le valider, chaque signal de mesure dont l'intégrité n'est pas validée étant éliminé.

Par suite, on met éventuellement en œuvre la méthode contrôle de redondance de cycle connu sous l'acronyme « CRC » et dénommée « Cyclic Redundancy Check » en langue anglaise.

Enfin, on peut acquérir les signaux de mesure à l'aide des capteurs de vibrations indifféremment soit de manière simultanée soit de manière séquentielle, et on peut transmettre ces signaux de mesure à un organe de contrôle de manière séquentielle préalablement à la génération de signatures vibratoires.

L'invention et ses avantages apparaîtront avec plus de détails dans le cadre de la description qui suit avec des exemples de réalisation donnés à titre illustratif en référence aux figures annexées qui représentent :
- la figure 1, une vue d'un giravion muni d'une boîte de transmission principale selon l'invention,
- la figure 2, une coupe d'un ensemble mécanique selon un premier mode de réalisation,
- la figure 3, un schéma explicitant un deuxième mode de réalisation,
- la figure 4, un schéma explicitant un troisième mode de réalisation,
- la figure 5, un schéma explicitant le procédé selon l'invention,
- la figure 6, une première variante d'acquisition des signaux de mesure, et
- la figure 7, une deuxième variante d'acquisition des signaux de mesure.

Les éléments présents dans plusieurs figures distinctes sont affectés d'une seule et même référence.

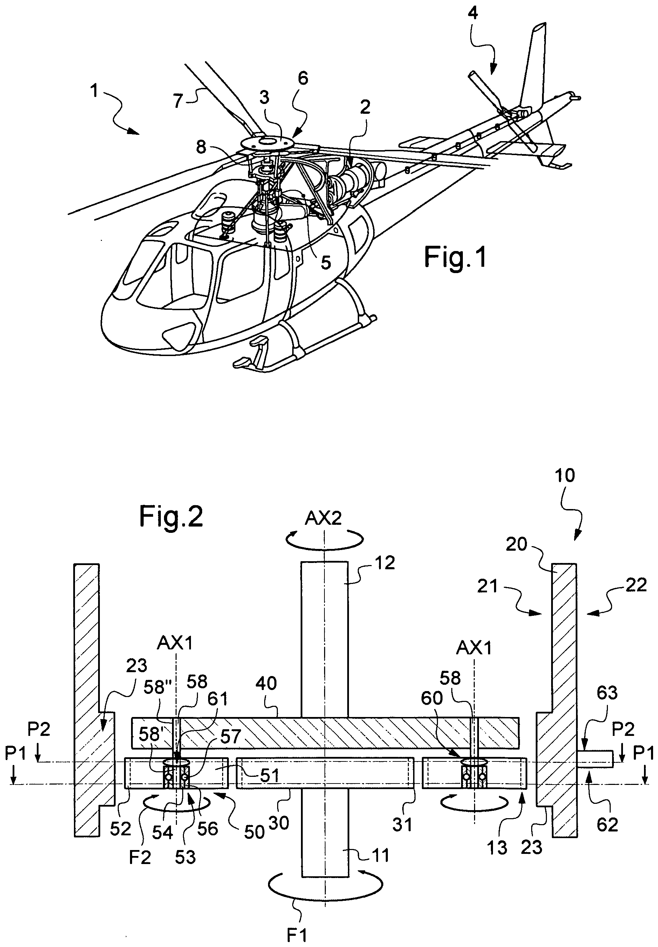

La figure 1 présente un giravion 1 de type hélicoptère muni d'une boîte de transmission principale 5 selon l'invention.

Ce giravion comprend en effet un moteur ayant notamment pour fonctionner de mettre en mouvement d'une part un rotor principal 3 de sustentation et de propulsion et d'autre part un rotor arrière 4.

La boîte de transmission principal 5 est alors engrenée par un arbre d'entrée mis en mouvement par le moteur 2 afin d'entraîner un mât rotor 8, ce mât rotor 8 étant solidaire d'un moyeu 6 du rotor principal 3 équipé d'une pluralité de pales 7. L'arbre d'entrée effectuant une rotation à une première vitesse supérieure à la deuxième vitesse de rotation que doit atteindre le rotor principal 3, la boîte de transmission principale comporte au moins un ensemble mécanique selon l'invention constituant un moyen de réduction épicycloïdal.

La figure 2 présente une coupe d'un tel ensemble mécanique 10 conforme à l'invention.

Indépendamment du mode de réalisation, cet ensemble mécanique 10 est un moyen de réduction épicycloïdal pourvu d'un engrenage planétaire 30 solidaire en rotation d'un premier arbre 11, le premier arbre 11 étant mis en mouvement directement ou indirectement par un moteur. Le premier arbre 11 et l'engrenage planétaire 30 sont alors à même d'effectuer une rotation autour d'un premier axe de symétrie axial de l'engrenage planétaire 30 et du premier arbre 11.

De plus, l'engrenage planétaire 30 coopère avec une pluralité d'engrenages satellites 50, chaque engrenage satellite 50 ayant des premières dents 52 en prises avec des deuxièmes dents 31 de l'engrenage planétaire 30. Chaque engrenage satellite comporte un maneton 58, un moyen de liaison par roulement 53 de type roulement à billes ou à rouleaux et un corps 51 muni desdites premières dents 52.

Ainsi, une partie inférieure 58' d'un maneton 58 est insérée dans un moyen de liaison par roulement 53, ce moyen de liaison par roulement 53 étant inséré dans une cavité du corps 51 d'un engrenage satellite 50. Plus précisément, le moyen de liaison par roulement 53 comportant une pluralité de billes ou de rouleaux 57 glissant entre une bague externe 54 et une bague interne 56, le maneton 58 est fixé à la bague interne 56 alors que la bague externe 54 est fixée au corps 51. Le moyen de liaison par roulement 53 confère au corps 51 de l'engrenage satellite 50 correspondant la possibilité d'effectuer une rotation autour d'un premier axe de rotation AX1 selon lequel s'étend le maneton 58 et notamment une rotation sur lui-même. Le premier axe de rotation AX1 est un axe de symétrie axial du corps 51 par exemple.

En outre, l'ensemble mécanique comporte une couronne 20 extérieure dont la périphérie interne 21 délimite un espace annulaire 13 conjointement avec l'engrenage planétaire 30. Chaque engrenage satellite 50 évolue donc l'espace annulaire 13 en coopérant d'une part avec l'engrenage planétaire 30 et d'autre part avec la couronne 20, et notamment des dents 23 de la périphérie interne 21 de cette couronne 20.

De plus, chaque engrenage satellite 50 est porté par un porte-satellite 40 solidaire en rotation autour de son deuxième axe de symétrie axial dénommé deuxième axe de rotation AX2 d'un deuxième arbre 12, ce deuxième arbre 12 pouvant être le mât rotor 8 d'un giravion.

Dès lors, une partie supérieure 58" du maneton 58 de chaque engrenage satellite 50 saille du corps 51 pour être fixée au porte-satellite 40.

Par suite, une rotation du premier arbre 11 selon la flèche F1 entraîne une rotation de l'engrenage planétaire 30 sur lui-même autour du deuxième axe de rotation AX2. La couronne 20 extérieure étant fixe, chaque corps 51 effectue d'une part une rotation sur lui-même autour du premier axe de rotation AX1 associé selon la flèche F2 et d'autre part une rotation autour de l'engrenage 30 et donc du deuxième axe de rotation AX2. Ce mouvement rotatif autour du deuxième axe de rotation AX2 entraîne une rotation du porte-satellite par l'intermédiaire des manetons 58 et de fait du deuxième arbre selon une deuxième vitesse inférieure à la première vitesse de rotation du premier arbre 11.

Le fonctionnement de l'ensemble mécanique peut induire une dégradation de l'intégrité physique de ces différents composants. Des criques peuvent apparaître sur le porte-satellite ou sur un engrenage satellite par exemple.

Pour effectuer un diagnostic de l'ensemble mécanique 10 et détecter une éventuelle crique, l'ensemble mécanique comprend un moyen de surveillance 60 pourvu d'un capteur de vibrations 61 par engrenage satellite 50. Ainsi, chaque engrenage satellite 50 est muni d'un capteur de vibrations 61, de type accéléromètre ou à émission acoustique par exemple.

Par ailleurs, le capteur de vibrations d'un engrenage satellite donné peut effectuer des mesures dans un plan de mesure parallèle à un plan de roulement de l'engrenage satellite donné et donc perpendiculaire au premier axe de rotation AX1 de cet engrenage satellite. Ainsi, le capteur de vibration peut être un accéléromètre bi-axial apte à effectuer des mesures selon deux axes contenus dans le plan de mesure, des axes radiaux par rapport à l'engrenage satellite par exemple.

De plus, le moyen de surveillance comprend un organe de contrôle 63 communiquant avec les capteurs de vibrations 61 afin d'ordonner à ces capteurs de vibrations d'acquérir un signal de mesure de vibration et de lui transmettre ledit signal.

L'organe de contrôle 63 peut par exemple être agencé sur une périphérie externe 22 de la couronne 20 et communiquer directement avec les capteurs de vibration 61 par une liaison sans fil de type radio ou ultrasonore par exemple, ou en référence à la figure 2 être déporté et communiquer indirectement avec les capteurs de vibration 61 via une antenne 62 agencée sur la périphérie externe 22. L'antenne 62 peut communiquer par une liaison sans fil de type radio ou ultrasonore par exemple avec les capteurs de vibrations et par une liaison sans fil ou filaire avec l'organe de contrôle 63.

A l'aide des signaux de mesure, on verra qu'il est possible de diagnostiquer l'état de l'ensemble mécanique 10.

Chaque capteur de vibrations 51 peut être autoalimenté, l'énergie nécessaire à son fonctionnement étant par exemple générée par la rotation de l'engrenage satellite 50 associé.

Les capteurs de vibrations sont alors compacts et peuvent être agencés sans difficulté dans un engrenage satellite 50.

Par ailleurs, chaque capteur est contenu dans un plan de surveillance P2, ce plan de surveillance P2 pouvant surplomber un plan de roulement P1 contenant le moyen de liaison par roulement 53 de l'engrenage satellite 50.

En référence à la figure 2, tous les capteurs de vibrations 61 peuvent être contenus dans un même plan de surveillance P2, éventuellement confondu avec leurs plans de mesure.

Selon le premier mode de réalisation de la figure 2, un capteur de vibrations 61 est agencé autour du maneton 58 et au dessus du moyen de liaison par roulement 53 à billes ou à rouleaux de l'engrenage satellite associé, le corps 51 entourant conjointement le moyen de liaison par roulement 53 et le capteur de vibrations 61.

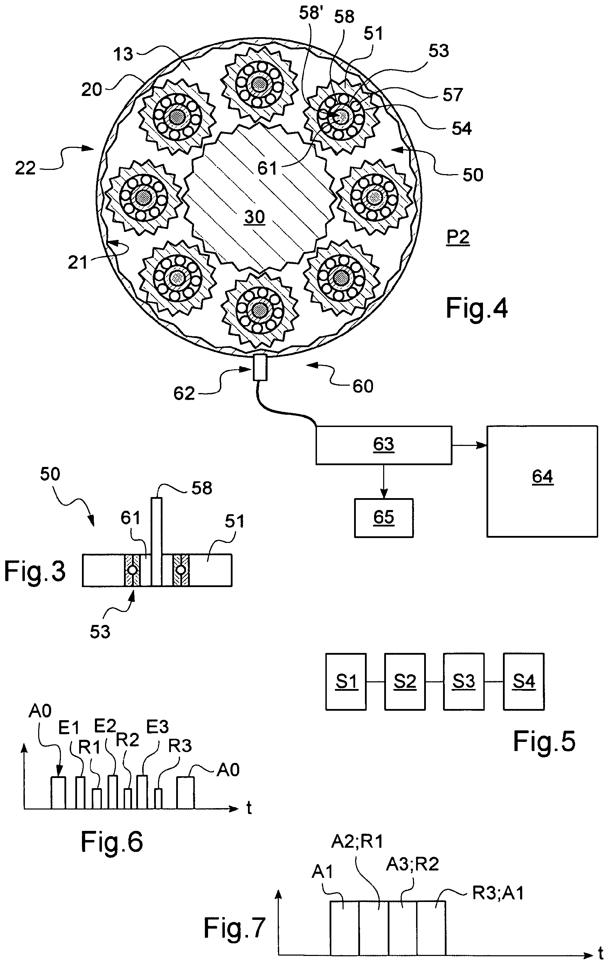

En référence à la figure 3, selon un deuxième mode de réalisation, le capteur de vibrations 61 d'un engrenage satellite donné est agencé entre le maneton 58 et le moyen de liaison par roulement 53 de l'engrenage satellite associé.

On note qu'un capteur de vibrations d'un ensemble mécanique 10 peut être agencé selon le premier mode de réalisation alors qu'un autre capteur de vibration est agencé selon le deuxième mode de réalisation, les capteurs de vibrations pouvant être disposés cependant dans un même plan de surveillance P2. De même, ces premier et deuxième modes de réalisation peuvent être chacun ou conjointement combinés avec un troisième mode de réalisation.

En référence à la figure 4, selon un troisième mode de réalisation préféré, le capteur de vibrations 61 d'un engrenage satellite donné est agencé à l'intérieur du maneton 58 de cet engrenage satellite 50 donné, et plus particulièrement dans la partie inférieure 58' de ce maneton.

Par ailleurs, le moyen de surveillance 60 peut comporter une mémoire de stockage 64, qui communique avec l'organe de contrôle 63, un processeur par exemple. L'organe de contrôle 63 et la mémoire de stockage 64 peuvent constituer un même équipement.

Les mesures effectuées par les capteurs de vibration sous le contrôle de l'organe de contrôle 63 sont alors stockées dans la mémoire de stockage 64 pour leur exploitation future, à l'issue du vol du giravion le cas échéant.

De même, le moyen de surveillance 60 peut comporter un moyen d'alarme 65 sonore ou visuel. A l'aide des mesures effectuées par les capteurs de vibration 61, l'organe de contrôle peut effectuer un diagnostic de l'ensemble mécanique 10 en appliquant un procédé préprogrammé, par exemple le procédé selon l'invention, et activer le moyen d'alarme s'il s'avère qu'un composant est défectueux.

En référence à la figure 5, selon l'invention durant une étape S1, on acquière un signal de mesure par capteur de vibrations 61 agencé dans un engrenage satellite 50.

L'organe de contrôle 63 demande aux capteurs de vibrations 61 de vérifier la présence de vibrations. En effet, une crique ménagée par exemple dans le corps d'un engrenage satellite est à l'origine d'une vibration lorsqu'une bille ou un rouleau du moyen de liaison par roulement 53, la couronne 20 ou le corps 51 glissent contre cette crique.

Les capteurs de vibrations étant au plus prêt des endroits sensibles et de la crique en étant chacun agencé dans un engrenage satellite, cette vibration est détectée même si elle s'avère de faible amplitude.

Chaque capteur de vibration envoie alors un signal de mesure à l'organe de contrôle 63, chaque signal de mesure comportant en son sein une information relative à la détection ou la non détection d'une vibration.

Eventuellement, l'envoi et la réception du signal de mesure peut être effectué selon la méthode de contrôle de redondance cyclique mettant en œuvre l'adjonction d'une clé au signal de mesure. On se référera à la littérature pour obtenir des informations concernant cette méthode de contrôle de données reçues.

Lorsque l'organe de contrôle 63 a acquis les signaux de mesure, cet organe de contrôle peut les stocker dans une mémoire de stockage 64, la suite du procédé étant mise en œuvre ultérieurement. Selon une autre variante, l'organe de contrôle met en œuvre la suite du procédé de surveillance.

Durant une deuxième étape S2 faisant suite à la première étape S1, on génère une signature vibratoire par signal de mesure acquis selon une méthode connue, telle que par transformée de Fourier, par identification paramétrique, ou par paramètre statistique par exemple.

Par suite, pour chaque engrenage satellite, on obtient un signal vibratoire.

Ensuite, durant une troisième étape S3, on compare la signature vibratoire provenant de chaque capteur de vibrations 61 à des signatures vibratoires provenant des autres capteurs de vibrations 61. Cette comparaison peut être effectuée par comparaison de la distance euclidienne ou encore de la distance de Mahalanobis par exemple.

Enfin, durant une étape S4, on établit un diagnostic à l'aide des résultats de la comparaison.

Par exemple, on constate la présence d'une anomalie dans un engrenage satellite donné si la signature vibratoire provenant du capteur de vibrations 61 de l'engrenage satellite 50 donné diffère des signatures vibratoires provenant des autres capteurs de vibrations 61.

En effet, les engrenages satellites étant identiques, les signatures vibratoires doivent normalement être identiques. Dès lors, si une signature vibratoire provenant d'un capteur de vibrations diffère d'au moins une signature vibratoire provenant d'un autre capteur de vibrations voire de tous les autres capteurs de vibrations, on peut en déduire la présence d'une anomalie.

De plus, si les capteurs de vibrations sont agencés dans un même plan, on peut localiser les défauts en détectant individuellement les défauts inhérents dans le domaine fréquentiel aux engrenages à savoir au niveau de l'engrènement entre un engrenage satellite et un engrenage planétaire ou un engrènement entre un engrenage satellite et la couronne, au premier arbre ou au moyen de liaison par roulement de l'engrenage satellite (fréquence du défaut de bague externe, fréquence du défaut de bague interne, fréquence du défaut de bague de l'élément tournant à savoir des billes ou des rouleaux, fréquence du défaut de cage).

De même, on peut localiser les défauts en détectant individuellement les défauts inhérents dans le domaine temporel à des indicateurs statistiques ou à des valeurs efficaces.

Par ailleurs, lorsque l'ensemble mécanique 10 a au moins trois capteurs de vibrations 61, on constate la présence d'une anomalie dans un organe lié à tous les engrenages satellites 50 donnés, si les signatures vibratoires provenant des capteurs de vibrations diffèrent les unes des autres. Une déviation généralisée met en effet en évidence une anomalie dans la couronne, le porte-satellite, le deuxième arbre ou l'organe planétaire par exemple.

En référence aux figures 6 et 7, on acquiert les signaux de mesure à l'aide des capteurs de vibrations 61 indifféremment soit de manière simultanée soit de manière séquentielle et éventuellement en temps réel, et on envoie lesdits signaux de mesure à un organe de contrôle 63 de manière séquentielle préalablement à la génération des signatures vibratoires. Ces figures 6 et 7 font référence à trois capteurs de vibrations pour illustrer à titre d'exemple les variantes associées.

En référence à la figure 6, l'organe de contrôle requiert une acquisition A0 simultanée. Ainsi, l'organe de contrôle demande simultanément à tous les capteurs de vibration d'effectuer une mesure et de mémoriser cette mesure.

En suite, l'organe de contrôle ordonne à chaque capteur de vibrations d'émettre un signal de mesure relatif à la mesure effectuée selon une séquence prédéterminée.

Par exemple, durant une étape E1, l'organe de contrôle demande à un premier capteur de vibration de transmettre sa mesure, ce premier capteur de vibration envoyant un premier signal de mesure selon une étape R1 faisant suite à l'étape E1. Durant une étape E2 faisant suite à l'étape R1, l'organe de contrôle demande à un deuxième capteur de vibration de transmettre sa mesure, ce deuxième capteur de vibration envoyant un deuxième signal de mesure selon une étape R2 faisant suite à l'étape E2. Durant une étape E3 faisant suite à l'étape R2, l'organe de contrôle demande à un troisième capteur de vibration de transmettre sa mesure, ce troisième capteur de vibration envoyant un troisième signal de mesure selon une étape R3 faisant suite à l'étape E3.

Ensuite, l'organe de contrôle entame un nouveau cycle.

Selon une autre variante, la mesure et l'envoi du signal de mesure vers un organe de contrôle sont réalisés de manière séquentielle en temps réel.

Par exemple, une première zone de couverture de l'ordre d'acquisition d'une mesure se trouve sensiblement en amont d'un point donné à savoir de l'organe de contrôle et ou de l'antenne de cette organe de contrôle, et une deuxième zone de couverture de la transmission du signal de mesure se trouve sensiblement en aval dudit point donné.

Lorsque le premier capteur de vibrations entre dans la première zone de couverture, ce premier capteur de vibrations reçoit l'ordre d'effectuer une mesure durant une première phase d'acquisition A0.

Dès lors, quand il atteint la deuxième zone de couverture faisant suite à la première zone de couverture, il transmet un premier signal de mesure à l'organe de contrôle selon une première phase d'émission R1. En parallèle, le deuxième capteur de vibrations entre dans la première zone de couverture, ce deuxième capteur de vibrations recevant l'ordre d'effectuer une mesure durant une deuxième phase d'acquisition A1.

Lorsque le deuxième capteur de vibration atteint la deuxième zone de couverture faisant suite à la première zone de couverture, il transmet un deuxième signal de mesure à l'organe de contrôle selon une deuxième phase d'émission R2. En parallèle, le troisième capteur de vibrations entre dans la première zone de couverture, ce troisième capteur de vibrations recevant l'ordre d'effectuer une mesure durant une troisième phase d'acquisition A3.

Enfin, lorsque le troisième capteur de vibration atteint de nouveau la deuxième zone de couverture faisant suite à la première zone de couverture, il transmet un troisième signal de mesure à l'organe de contrôle selon une troisième phase d'émission R3. En parallèle, le premier capteur de vibrations entre de nouveau dans la première zone de couverture, un nouveau cycle débutant alors.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Ensemble mécanique (10) muni d'un moyen de surveillance d'anomalie structurale et d'un engrenage planétaire (30) ainsi que d'une pluralité d'engrenages satellites (50) coopérant avec ledit engrenage planétaire (30), cet ensemble mécanique ayant un porte-satellite (40) portant chaque engrenage satellite (50), chaque engrenage satellite (50) comprenant un corps (51) denté ainsi qu'un moyen de liaison par roulement (53) interposé entre une partie inférieure (58') d'un maneton (61) de l'engrenage satellite (50) et ledit corps (51), chaque maneton (58) ayant une partie supérieure (58") saillante solidaire dudit porte-satellite (40), chaque corps (51) d'un engrenage satellite (50) effectuant d'une part une première rotation autour d'un premier axe de rotation (AX1) de cet engrenage satellite (50) et d'autre part une deuxième rotation autour d'un deuxième axe de rotation (AX2) du porte-satellite (50), ledit ensemble mécanique (10) comportant une couronne (20) extérieure ayant une périphérie interne (21) de la couronne (20) extérieure coopérant avec chaque engrenage satellite (50), chaque engrenage satellite (50) se déplaçant dans un espace annulaire (13) situé entre ladite périphérie interne (21) et ledit engrenage planétaire (50), chaque engrenage satellite (50) comportant un capteur de vibrations (61) d'un moyen de surveillance d'anomalie structurale, ledit moyen de surveillance étant pourvu d'un organe de contrôle (63) communiquant avec chaque capteur de vibrations (61) afin de recevoir un signal de mesure provenant de chaque capteur de vibrations (61) pour permettre la surveillance d'anomalie
**caractérisé en ce que** ledit moyen de surveillance comporte au moins une antenne (62) disposée sur une périphérie externe (22) de ladite couronne (20), ledit organe de contrôle (63) communiquant avec lesdits capteurs de vibrations (61) par l'intermédiaire de ladite au moins une antenne (62), ledit organe de contrôle étant configuré pour ordonner l'acquisition d'un signal de mesure par capteur de vibrations (61), ledit organe de contrôle étant configuré pour :
- générer une signature vibratoire par signal de mesure acquis,
- comparer la signature vibratoire provenant de chaque capteur de vibrations (61) aux signatures vibratoires provenant des autres capteurs de vibrations (61),
- constater la présence d'une anomalie dans un engrenage satellite donné si la signature vibratoire provenant d'un capteur de vibrations (61) dudit engrenage satellite (50) donné diffère des signatures vibratoires provenant des autres capteurs de vibrations (61).

2. Ensemble mécanique selon la revendication 1, **caractérisé en ce qu'**un capteur de vibrations (61) est agencé à l'intérieur du maneton (58) d'un engrenage satellite (50).

3. Ensemble mécanique selon la revendication 2, **caractérisé en ce que**, ledit capteur de vibrations (61) est agencé à l'intérieur de la partie inférieure (58') dudit maneton (58).

4. Ensemble mécanique selon l'une quelconque des revendications précédentes,
**caractérisé en ce que** le moyen de liaison par roulement (53) d'un engrenage satellite (50) donné étant contenu dans un plan de roulement (P1), le capteur de vibrations (61) dudit engrenage satellite (50) donné est disposé dans un plan de surveillance (P2) surplombant ledit plan de roulement (P1).

5. Ensemble mécanique selon l'une quelconque des revendications précédentes,
**caractérisé en ce que** ledit capteur de vibrations (61) d'un engrenage satellite (50) donné effectue des mesures dans un plan de mesure parallèle à un plan de roulement (P1) dudit engrenage satellite (50) donné.

6. Ensemble mécanique selon l'une quelconque des revendications précédentes,
**caractérisé en ce que** les capteurs de vibrations (61) sont disposés dans un même plan de surveillance (P2).

7. Ensemble mécanique selon l'une quelconque des revendications précédentes,
**caractérisé en ce que** ledit moyen de surveillance comporte une mémoire de stockage (64).

8. Ensemble mécanique selon l'une quelconque des revendications précédentes,
**caractérisé en ce que** ledit moyen de surveillance comporte un moyen d'alarme (65).

9. Boîte de transmission (5) d'un giravion,
**caractérisé en ce qu'**elle comporte un ensemble mécanique (10) selon l'une quelconque des revendications précédentes.

10. Procédé de surveillance d'une anomalie structurale d'un ensemble mécanique (10) selon l'une quelconque des revendications précédentes muni d'au moins deux capteurs de vibrations (61), au cours duquel :
- on acquiert un signal de mesure par capteur de vibrations (61) agencé dans un engrenage satellite (50),
- on génère une signature vibratoire par signal de mesure acquis,
- on compare la signature vibratoire provenant de chaque capteur de vibrations (61) aux signatures vibratoires provenant des autres capteurs de vibrations (61),
- on constate la présence d'une anomalie dans un engrenage satellite donné si la signature vibratoire provenant d'un capteur de vibrations (61) dudit engrenage satellite (50) donné diffère des signatures vibratoires provenant des autres capteurs de vibrations (61).

11. Procédé selon la revendication 10,
**caractérisé en ce que**, l'ensemble mécanique (10) ayant au moins trois capteurs de vibrations (61), on constate la présence d'une anomalie dans un organe lié à tous les engrenages satellites (50), si les signatures vibratoires provenant des capteurs de vibrations diffèrent les unes des autres.

12. Procédé selon l'une quelconque des revendications 10 à 11,
**caractérisé en ce que** suite à l'acquisition d'un signal de mesure, on vérifie l'intégrité du signal pour le valider, chaque signal de mesure dont l'intégrité n'est pas validée étant éliminé.

13. Procédé selon l'une quelconque des revendications 10 à 12,
**caractérisé en ce que** l'on acquiert les signaux de mesure à l'aide des capteurs de vibrations (61) indifféremment soit de manière simultanée soit de manière séquentielle, et on transmet lesdits signaux de mesure à un organe de contrôle (63) de manière séquentielle préalablement à la génération de signatures vibratoires.

## Patentansprüche

1. Mechanische Baugruppe (10) mit Mitteln zur Überwachung einer strukturellen Anomalie und einem Planetengetriebe (30) sowie einer Mehrzahl von Planetenrädern (50), die mit dem Planetengetriebe (30) zusammenwirken, wobei die mechanische Baugruppe einen Planetenträger (40) aufweist, der jedes Planetenrad (50) trägt, jedes Planetenrad (50) einen gezahnten Körper (51) und eine Wälzverbindungseinrichtung (53) aufweist, die zwischen einem unteren Abschnitt (58') eines Kurbelzapfens (61) des Planetenrads (50) und dem Körper (51) angeordnet ist, wobei jeder Kurbelzapfen (58) einen vorspringenden oberen Teil (58") aufweist, der fest mit dem Planetenradträger (40) verbunden ist, wobei jeder Körper (51) eines Planetenrads (50) einerseits eine erste Drehung um eine erste Drehachse (AX1) dieses Planetenrads (50) und andererseits eine zweite Drehung um eine zweite Drehachse (AX2) des Planetenradträgers (50) ausführt, wobei die mechanische Baugruppe (10) einen äußeren Kranz (20) aufweist, wobei ein Innenumfang (21) des äußeren Kranzes (20) mit jedem Planetenrad (50) zusammenwirkt, jedes Planetenrad (50) sich in einem ringförmigen Raum (13) bewegt, der zwischen dem Innenumfang (21) und dem Planetenrad (50) angeordnet ist, wobei jedes Planetenrad (50) einen Schwingungssensor (61) eines Mittels zur Überwachung einer strukturellen Anomalie aufweist, wobei das Überwachungsmittel mit einem Steuerorgan (63) versehen sind, das mit jedem Schwingungssensor (61) in Verbindung steht, um ein Messsignal von jedem Schwingungssensor (61) zu empfangen, um eine Überwachung von Anomalien zu ermöglichen,
**dadurch gekennzeichnet, dass** die Überwachungsmittel mindestens eine Antenne (62) umfassen, die an einem Außenumfang (22) des Kranzes (20) angeordnet ist, wobei das Steuerelement (63) mit den Schwingungssensoren (61) über die mindestens eine Antenne (62) kommuniziert, wobei das Steuerelement konfiguriert ist, um die Erfassung eines Messsignals durch den Schwingungssensor (61) anzuweisen, um:
- pro erfasstem Messsignal eine Schwingungssignatur zu erzeugen,
- die Schwingungssignatur von jedem Schwingungssensor (61) mit den Schwingungssignaturen der anderen Schwingungssensoren (61) zu vergleichen,
- das Vorhandensein einer Anomalie in einem gegebenen Satellitengetriebe festzustellen, wenn sich die Schwingungssignatur von einem der Schwingungssensoren (61) des gegebenen Satellitengetriebes (50) von den Schwingungssignaturen der anderen Schwingungssensoren (61) unterscheidet.

2. Mechanische Baugruppe nach Anspruch 1,
**dadurch gekennzeichnet, dass** ein Schwingungssensor (61) innerhalb des Kurbelzapfens (58) eines Satellitengetriebes (50) angeordnet ist.

3. Mechanische Baugruppe nach Anspruch 2,
**dadurch gekennzeichnet, dass** der Schwingungssensor (61) innerhalb des unteren Abschnitts (58') des Kurbelzapfens (58) angeordnet ist.

4. Mechanische Baugruppe nach einem der vorhergehenden Ansprüche,
**dadurch gekennzeichnet, dass** die Wälzverbindungseinrichtung (53) eines gegebenen Satellitengetriebes (50) in einer Wälzebene (P1) enthalten ist, wobei der Schwingungssensor (61) des gegebenen Satellitengetriebes (50) in einer Überwachungsebene (P2) angeordnet ist, die über die Laufebene (P1) liegt.

5. Mechanische Baugruppe nach einem der vorhergehenden Ansprüche,
**dadurch gekennzeichnet, dass** der Schwingungssensor (61) eines gegebenen Satellitengetriebes (50) Messungen in einer Messebene parallel zu einer Wälzebene (P1) des gegebenen Satellitengetriebes (50) durchführt.

6. Mechanische Baugruppe nach einem der vorhergehenden Ansprüche,
**dadurch gekennzeichnet, dass** die Schwingungssensoren (61) in einer gleichen Überwachungsebene (P2) angeordnet sind.

7. Mechanische Baugruppe nach einem der vorhergehenden Ansprüche,
**dadurch gekennzeichnet, dass** das Überwachungsmittel einen Datenspeicher (64) umfasst.

8. Mechanische Baugruppe nach einem der vorhergehenden Ansprüche,
dass das Überwachungsmittel ein Alarmmittel (65) umfasst.

9. Übersetzungsgetriebe (5) eines Drehflügelflugzeugs, **dadurch gekennzeichnet, dass** es eine mechanische Baugruppe (10) gemäß einem der vorstehenden Ansprüche umfasst.

10. Verfahren zum Überwachen einer strukturellen Anomalie einer mechanischen Baugruppe (10) gemäß einem der vorhergehenden Ansprüche, die mit mindestens zwei Schwingungssensoren (61) versehen ist, bei dem :
- ein Messsignal von einem in einem Satellitengetriebe (50) angeordneten Schwingungssensor (61) erfasst wird,
- für jedes erfasste Messsignal eine Schwingungssignatur erzeugt wird,
- die Schwingungssignatur von jedem Schwingungssensor (61) mit den Schwingungssignaturen der anderen Schwingungssensoren (61) verglichen wird,
- das Vorliegen einer Anomalie in einem gegebenen Satellitengetriebe festgestellt wird, wenn sich die Schwingungssignatur von einem Schwingungssensor (61) des gegebenen Satellitengetriebes (50) von den Schwingungssignaturen der anderen Schwingungssensoren (61) unterscheidet.

11. Verfahren nach Anspruch 10,
**dadurch gekennzeichnet, dass** die mechanische Baugruppe (10) mindestens drei Schwingungssensoren (61) aufweist, wobei eine Anomalie in einem mit allen Planetenrädern (50) verbundenen Element erfasst wird, wenn sich die Schwingungssignaturen von den Schwingungssensoren voneinander unterscheiden.

12. Verfahren nach einem der Ansprüche 10 bis 11,
**dadurch gekennzeichnet, dass** nach dem Erfassen eines Messsignals die Integrität des Signals überprüft wird, um es zu validieren, wobei jedes Messsignal, dessen Integrität nicht validiert wird, eliminiert wird.

13. Verfahren nach einem der Ansprüche 10 bis 12,
**dadurch gekennzeichnet, dass** die Messsignale mittels der Schwingungssensoren (61) entweder gleichzeitig oder sequentiell erfasst werden, und dass die Messsignale vor der Erzeugung von Schwingungssignaturen sequentiell an ein Steuerorgan (63) übertragen werden.

## Claims

1. Mechanical assembly (10) provided with a means for monitoring structural anomalies, and with a sun gear (30) and a plurality of planet gears (50) cooperating with said sun gear (30), said mechanical assembly having a planet carrier (40) carrying each planet gear (50), each planet gear (50) comprising a toothed body (51) and a rolling connection means (53) positioned between a lower part (58') of a crankpin (61) of the planet gear (50) and said body (51), each crankpin (58) having a projecting upper part (58") that is rigidly connected to said planet carrier (40), each body (51) of a planet gear (50) performing a first rotation about a first axis of rotation (AX1) of said planet gear (50) and a second rotation about a second axis of rotation (AX2) of the planet carrier (50), said mechanical assembly (10) comprising an external ring (20) having an inner circumference (21) of the external ring (20), said inner circumference cooperating with each planet gear (50), each planet gear (50) moving in an annular space (13) located between said inner circumference (21) and said sun gear (50), each planet gear (50) comprising a vibration sensor (61) of a structural anomaly monitoring means, said monitoring means being provided with a control unit (63) communicating with each vibration sensor (61) in order to receive a measurement signal from each vibration sensor (61) to allow anomalies to be monitored, **characterised in that** said monitoring means comprises at least one antenna (62) arranged on an outer circumference (22) of said ring (20), said control unit (63) communicating with said vibration sensors (61) via said at least one antenna (62), said control unit being configured to command the acquisition of a measurement signal by means of the vibration sensor (61), said control unit being configured to:
- generate a vibration signature by means of the acquired measurement signal;
- compare the vibration signature from each vibration sensor (61) with the vibration signatures from the other vibration sensors (61);
- determine the presence of an anomaly in a given planet gear if the vibration signature from a vibration sensor (61) of said given planet gear (50) differs from the vibration signatures from the other vibration sensors (61).

2. Mechanical assembly according to claim 1, **characterised in that** a vibration sensor (61) is arranged inside the crankpin (58) of a planet gear (50).

3. Mechanical assembly according to claim 2, **characterised in that** said vibration sensor (61) is arranged inside the lower part (58') of said crankpin (58).

4. Mechanical assembly according to any of the preceding claims, **characterised in that**, the rolling connection means (53) of a given planet gear (50) being contained in a rolling plane (P1), the vibration sensor (61) of said given planet gear (50) is arranged in a monitoring plane (P2) overlying said running plane (P1).

5. Mechanical assembly according to any of the preceding claims, **characterised in that** said vibration sensor (61) of a given planet gear (50) performs measurements in a measurement plane parallel to a rolling plane (P1) of said given planet gear (50).

6. Mechanical assembly according to any of the preceding claims, **characterised in that** the vibration sensors (61) are arranged in the same monitoring plane (P2).

7. Mechanical assembly according to any of the preceding claims, **characterised in that** said monitoring means comprises a storage memory (64).

8. Mechanical assembly according to any of the preceding claims, **characterised in that** said monitoring means comprises an alarm means (65).

9. Gearbox (5) of a rotorcraft, **characterised in that** said gearbox comprises a mechanical assembly (10) according to any of the preceding claims.

10. Method for monitoring a structural anomaly of a mechanical assembly (10) according to any of the preceding claims, said assembly being provided with at least two vibration sensors (61), in which method:
- a measurement signal is acquired by means of the vibration sensor (61) arranged in a planet gear (50);
- a vibration signature is generated by means of the acquired measurement signal;
- the vibration signature from each vibration sensor (61) is compared with the vibration signatures from the other vibration sensors (61);
- the presence of an anomaly in a given planet gear is determined if the vibration signature from a vibration sensor (61) of said given planet gear (50) differs from the vibration signatures from the other vibration sensors (61).

11. Method according to claim 10, **characterised in that**, the mechanical assembly (10) having at least three vibration sensors (61), the presence of an anomaly in a member connected to all the planet gears (50) is determined if the vibration signatures from the vibration sensors differ from one another.

12. Method according to either claim 10 or claim 11, **characterised in that**, following the acquisition of a measurement signal, the integrity of the signal is checked to validate said signal, each measurement signal being eliminated if the integrity thereof is not validated.

13. Method according to any of claims 10 to 12, **characterised in that** the measurement signals are acquired using the vibration sensors (61) either simultaneously or sequentially, and said measurement signals are transmitted to a control unit (63) sequentially prior to the generation of vibration signatures.
